# EUROPEAN PATENT APPLICATION

(11) **EP 1 441 533 A2**
(43) Date of publication of application: **28.07.2004**
(21) Application number: 03104875.4
(22) Date of filing: 22.12.2003
(51) Int. Cl.: H04N 7/24

(54) **Stream for a desired quality level**

(30) Priority: 20.12.2002 FI 20022259
(71) Applicant: Oplayo Oy, 00180 Helsinki (FI)
(72) Inventor: Kesäniemi, Martti, 00700, Helsinki (FI); Pohjola, Teemu, Espoo, 02660 (FI)
(74) Representative: Savela, Antti-Jussi

(57) **Abstract**

A video stream is first transmitted at a low quality level wherein it may be displayed almost in real-time. The user may request the same video again with a better quality level. Upon receipt of the request, the sending terminal transmits extra information. The receiving terminal adds this extra information to the original stream to form a cumulative stream. The cumulative stream is now displayed. If its quality level still does not satisfy the user, he may again request the same video. In response to the request the sending terminal sends new extra information that the receiving terminal adds to the cumulative stream.

## Description

### Field of the Invention

This invention relates to data streams, such as video streams, that are sent through a transmission network. Especially, the invention relates to streams sent through a mobile network.

### Background of the Invention

At present, a trend for sending and ordering videos has become more and more popular. These videos are often called streaming videos. The receiving terminal starts displaying a single video stream before the whole stream has been received. Since the data flow is continuous from the sending terminal up to the receiving terminal, transmission of and displaying the video are in a very close connection with each other. In mobile networks it is also possible to transmit a video via a multimedia messaging service (MMS). However, the capacity of the transmission channel is often quite limited. This is true especially in mobile networks where the transmission happens wirelessly. For example, the capacity is 26 kbps (20 kbps for video and 6 for audio) in the GPRS (General Packet Radio System) networks. In EDGE (Enhanced Data for GSM Evolution) networks the capacity is greater.

The limited amount of data of a video stream affects the quality of the video at the display of a receiving terminal. For example, if the size of the display of a receiving terminal is 160*120 pixels and sixteen bits is used for each pixel, each frame of a video in this size consists of 307200 bits. If 25 frames is desired in one second, the requirement for this display is 7,68 Mbits/s. If the compression factor for the transmission were 1/10, the transmission would require in this example the capacity of 0,768 Mbits/s. Consequently, it is evident that due to the limited transmission channel (26 kbps for example) it is impossible to transmit the video in real-time. Naturally the receiving terminal may buffer a part of the video stream before the show time, but then the subscriber has to wait quite a long time.

Thus, the limited transmission capacity is in many cases a main factor that affects the quality of a video stream perceived by a user.

Taking into account the above-mentioned matters, the viewing experience of a video, i.e. how a viewer perceives the quality of a video, is constructed from many different aspects: the size of display, transmission capacity, the number of colors, buffering time etc.

An objective of the present invention is to alleviate the above-mentioned drawbacks and to offer a user an opportunity to receive a video with a desired quality level. The objective is achieved in a way described in the claims.

### Summary of the Invention

The principle of the invention is that a multimedia presentation is first transmitted at a low quality level wherein it may be displayed after a relatively short buffering period, almost in real-time. If the user does not accept the quality of this presentation, he requests the same presentation again, but this time, with a better quality level. Upon receipt the new request, the sending terminal transmits extra information. The extra information comprise additions to the basic multimedia presentation, which, when added to the previous presentation, increase the quality of that stream. The receiving terminal adds the extra information to the original multimedia presentation to form a cumulative stream. The cumulative stream is now displayed. If the quality level of the cumulative multimedia presentation still does not satisfy the user, he may again request the same presentation. In response to the request the sending terminal sends new extra information that the receiving terminal adds to the previous stream.

The additions in each extra transmission may comprise of encoding differences between the qualities of the current extra transmission and the previous extra transmission. Alternatively the basic multimedia presentation may comprise a limited number of frames and each extra transmission comprise of additional frames. Alternatively, the basic multimedia presentation may comprise a limited number of pixels per frame and each extra transmission comprise of additional pixels per frame. Further, the basic multimedia presentation comprises a limited amount of color information per frame and each extra transmission comprise of additional color information per frame.

So, the quality level of the video becomes better step by step, and the user may request the video as many times as needed for achieving a desired quality level. However, it should be noted that in real solutions the memory size and/or the processing power of the receiving terminal limits the number of receiving extra information.

A terminal for playing a multimedia presentation received via a transmission network comprises storing means for storing a basic multimedia presentation, means for forming a request for an extra transmission comprising additions to the basic multimedia presentation, adding means for making a cumulative stream by combining the additions with the basic multimedia presentation, and a displaying means for displaying the cumulative stream.

Briefly, the idea of the invention is that a video that is shown in the display of a receiving terminal is a cumulative effect from a number of separate video streams each containing extra information relative to the previous stream.

### Brief Description of the Drawings

In the following the invention is described in more detail with reference to figs 1 - 7 in which,
- FIG. **1**: illustrates an example of a number of different video streams, each containing different data for the same video show;
- FIG. **2**: illustrates an example of a cumulative video stream shown in the display of a receiving terminal;
- FIG. **3**: illustrates another example of a cumulative video stream shown in the display of a receiving terminal;
- FIG. **4A**: illustrates an example of a difference encoding method;
- FIG. **4B**: illustrates an example of a result image that is composed of an original component and difference components;
- FIG. **5**: illustrates an example of streams that contain different frames for the same video show;
- FIG. **6**: illustrates an example of an embodiment of the inventive method in a flow chart format; and
- FIG. **7**: illustrates an example of an arrangement according to the invention.

### Description of the Invention

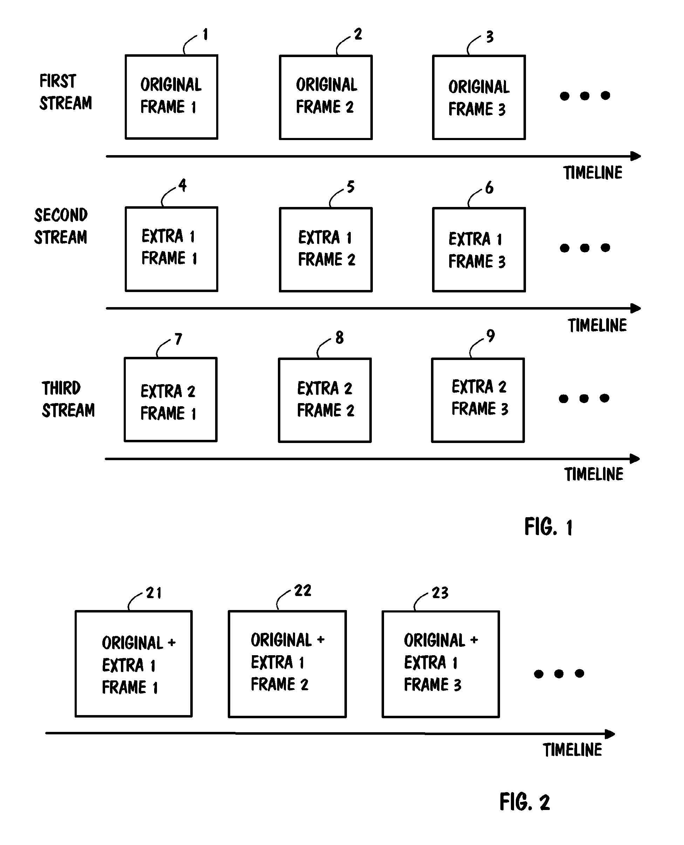

FIG. **1** illustrates an example of three different video streams. The streams represent data flow from a source to a destination. Each stream contains different data relating to the same video presentation.

When a user of a receiving terminal, such as a mobile phone or PDA (Personal Digital Assistant) desires to see a multimedia presentation in his terminal, he initializes the process by sending a request to a server, which offers the desired video presentation. The server receives the request, then processes it, and finally sends the requested presentation to the receiving terminal. The first stream in fig. 1 denotes the presentation . It contains data for displaying the video in the receiving terminal in a certain basic quality level. Consequently, frames **1, 2, 3** in this basic stream are original streams.

The user of the receiving terminal views the presentation. If the user perceives the quality not good enough , he initializes a new request for the same video presentation. Instead of giving the same stream as a response, the sending terminal sends a new stream, the second stream. Frames **4, 5, 6** of the second stream contain extra information relative to original frames **1, 2, 3**. The receiving terminal adds those frames of the extra information to the original frames to form a cumulative stream.

FIG. **2** illustrates the cumulative stream. The frames **21, 22, 23** of the cumulative stream comprise the data of the original frames 1-3 and the extra frames 4-6. The original frames were stored in the memory (data storage) for composing the possible cumulative stream. Since each cumulative frame contains more information than the original frame, the quality of the presentation perceived by the user is better. This can be clearly seen when watching the cumulative stream. The quality improvement may also be noticed by examining the amount of bits. For example, when the bit rate of each stream is 20 kbps, the cumulative stream contains the data flow of 20 + 20 = 40 kbps. The more information per frame the better quality level.

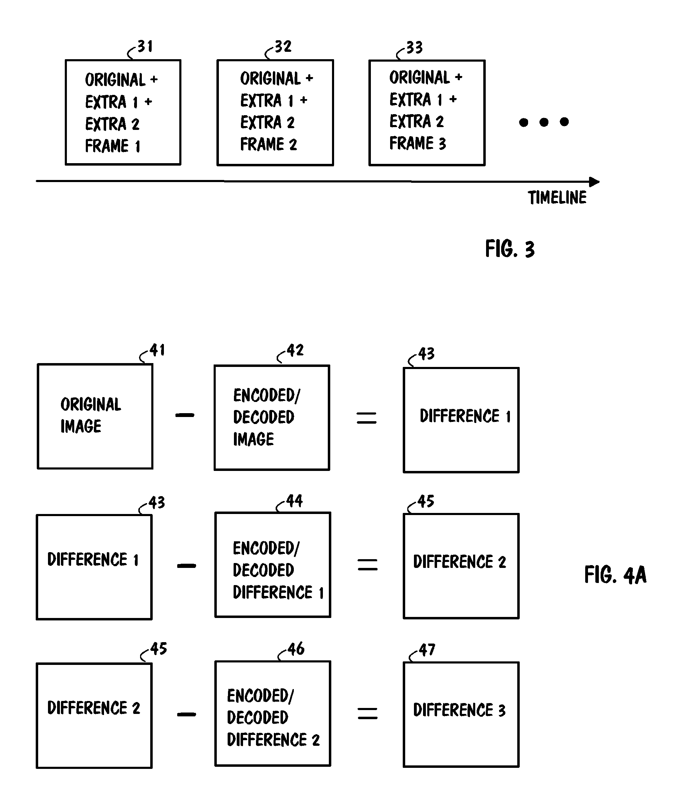

However, it might happen that this second quality level may still not satisfy the user. So, he requests to have the stream once again. Frames **7, 8, 9** in FIG. **1** of the third stream contain extra information again. Now, the cumulative stream is composed from the first, second, and third stream (the first and second have been previously stored). The cumulative frames **31, 32, 33** in FIG. **3** are displayed in the receiving terminal.

The user may initialize as many requests as needed for obtaining the desired quality level.

The material sent in different streams may be based on different aspects. FIG. **4A** illustrates an example of a method, which forms difference information between an original data and the encoded/decoded original data. By forming a chain of differences, the residual difference becomes smaller and smaller the more differences are chained. When original image **41** is encoded and then decoded, a difference **43** exists between the original image and the decoded image **42**. When the difference **43** in turn is first encoded and then decoded, difference **45** between it **44** and difference **43** is formed. Consequently, encoding/decoding the second difference **45**, the third difference **47** is formed. The step of forming a difference error from a previous error can be made as many times as desired.

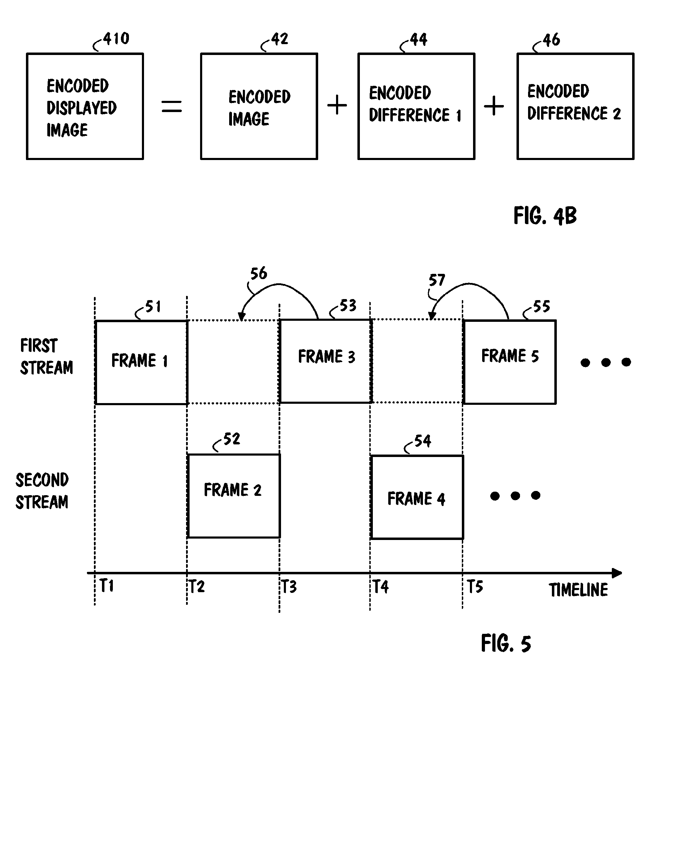

FIG. **4B** illustrates result image **410** that is composed of the original components and the difference components illustrated in FIG. **4A.** The result image corresponds as close as possible to the original image **41**. The result image **410** is an encoded image that is displayed, naturally after decoding.

The use of differences as data in the extra frames of the subsequent streams after the basic stream makes the quality of the final multimedia presentation better each time the data of a new stream is added to the previous cumulative stream. It should be noted that frames in each stream must match the corresponding frames in order to make it possible to add them to the cumulative frames. For example in FIG. **1**, frame **7** refers to the cumulative frame of the original **1** and the first extra frame **4**.

The use of differences between frames is not the only solution to obtain a better quality level. The additional streams following the first stream may contain other information than the differences for making the cumulative stream.

For example, FIG. **5** illustrates streams that contain different frames for the same video presentation. A limited number of the frames **51, 53, 55** in the first stream perform a rough presentation in the display. The frames are either displayed longer until the next frame is displayed, or a frame is displayed right away **56, 57** after the previous frame. In other words, the multimedia presentation is played either in the longer period of the frames, when the show looks discontinuous, or in the normal period of the frames, when the presentation looks high-speeded. The second stream contains the frames **52, 54,** which were 'missing' in the first stream. When making the cumulative stream, timestamps **T1, T2**, **T3**, **T4**, **T5** of the frames are used in forming the cumulative stream. The cumulative result shows much smoother in the display.

The type of the cumulative stream illustrated in FIG. **5** may also be used to create slow motion pictures from the presentation. Then the basic stream contains all frames needed to display the show at the normal speed. Adding extra frames from the subsequent streams into the basic stream increases the total time of the presentation if all frames are displayed in an equal time, i.e. the display time of the frames is not decreased. In this way the quality of the slow motion pictures remains the same as in the original presentation. On the other hand, the basic stream may contain frames for a high-speeded display, and the cumulative stream, containing also the frames of the additional stream/streams, forms a normal speed display.

Other ways for constructing the cumulative stream are, for example, that the first stream contains black an white information and the subsequent streams carry color information, or the first stream contains pixels for a small frame size and the subsequent streams carry additional pixels for a larger frame size. Sending more pixels (in an encoded form) may also be used for slow motion pictures for increasing the quality of the frames.

So, the material of each stream after the first stream comprises, for example, information about encoding differences, intermediate frames, additional pixels, color information or luminance information. Preferably the material is of the same type as in the first stream, but it may also be possible to use different material types in different streams. Thus, the cumulative stream may be a composition of different types of material streams. However, in this case a referral system between information of the separate streams is more complicated than if the material type of the streams were the same.

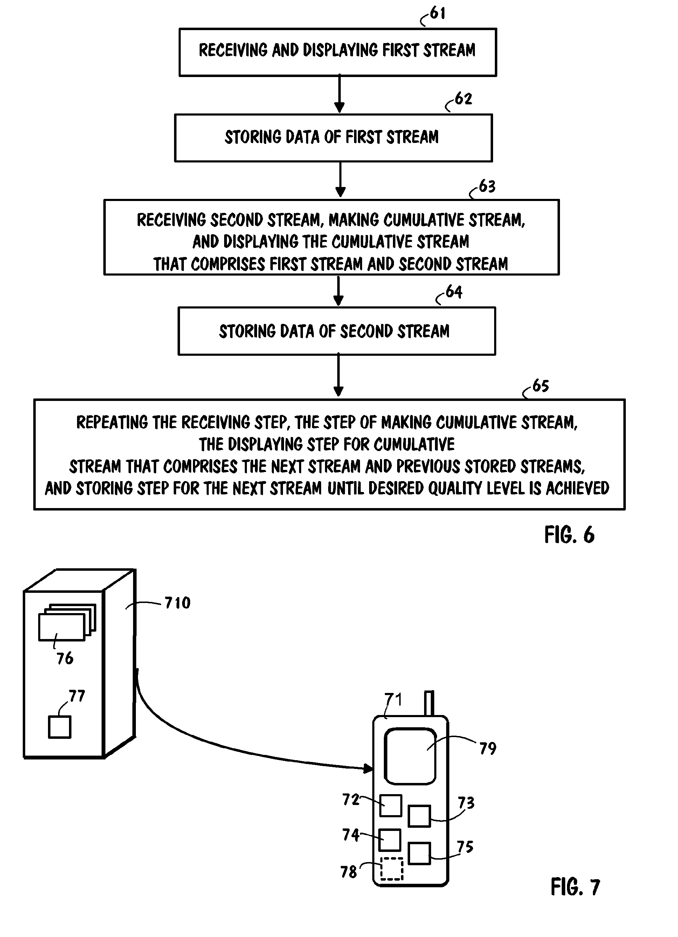

FIG. **6** illustrates an example of an embodiment of the inventive method in a flow chart format. The first stream is received and displayed in the receiving terminal, stage **61**. The displaying preferably starts before the whole stream is received. The data of the first stream is stored in the receiving terminal, stage **62**. If the quality level of the displayed show did not satisfy the user, he may initialize a new request for the same show. The second stream containing additional data for the show is transmitted from the sending terminal to the receiving terminal. The receiving terminal receives the second stream, makes the cumulative stream containing the data of the second stream and the stored data of the first stream, and displays the cumulative stream, stage **63**. The data of the second stream is stored in the receiving terminal, stage **64**. Since the quality level of the second cumulative stream may still not satisfy the user, he may again initialize a new request. New requests may be initialized as many times as needed for achieving the desired quality level. So the receiving step, the step of making the new cumulative stream, the displaying step and the storing step are repeated as many times as needed, stage **65**. The repetitive step of receiving the next stream receives a part of the stream when the repetitive step of making the cumulative stream is handling another preceding part of the stream, and the repetitive step of displaying the cumulative stream is displaying a part of the cumulative stream already made.

It should be noted that the steps **63, 64** that concern the second stream are in fact the first repetitive steps for a new stream. However FIG. **6** illustrates these steps separately for making the illustration of the method more clear.

FIG. **7** illustrates an example of an arrangement according to the i n-vention. The receiving terminal **71** comprises: a receiving means **72** for receiving at least one data stream containing material for the presentation; a storing means **73** for storing the material of each received stream; an adding means **74** for making a cumulative stream by adding material of the latest stream to the previously stored streams; and a displaying means **75** for displaying the cumulative stream in the display **79** of the terminal. The first data stream received in the receiving terminal performs the multimedia presentation in a basic quality level and each next data stream received increases the quality level of the show when the cumulative stream is made and displayed.

The receiving means **72** receives a part of the stream in turn at the same time when the adding means **74** makes the cumulative stream by handling another preceding part of said stream with the already stored material. The displaying means **75** di splays a part of the cumulative stream already made.

Sending terminal **710** requests the streams, and in response to the requests, the sending terminal sends the streams to the receiving terminal. The sending terminal comprises data storage **76** for storing each stream. If the requests received by the sending terminal are similar, i.e. requesting the same presentation and not indicating any new information, the sending terminal also comprises control means **77** for controlling which stream is actually in turn to be transmitted. Alternatively, if the requests indicate the subsequent stream in turn, the receiving terminal **71** comprises control means **78** for controlling which stream is actually in turn to be received. It is clear that all the mentioned means may be parts of one greater unit, so different solutions exist for forming an arrangement according to the invention.

Each of said streams are requested separately. However, if a certain quality level of the show is desired directly, one request indicates that all the streams needed for this quality level are to be sent as a response to this request. In this case, only the latest cumulative stream is displayed. The request or requests may be sent from the receiving terminal or another terminal. Thus if the user of another terminal desires, for example, to order a birthday multimedia presentation for greetings to his friend, he may initialize only one request containing the quality level information, and the friend sees only the final cumulative stream.

Since the receiving terminal comprises actually a small computer and the invention may be realized by software, it concerns a computer program product that is stored on a computer readable storage media. The product is adapted to perform the steps of the inventive method (at least the steps of claim 1) when run on a computer.

A basic presentation (such as video) may be sent in an MMS message, and the subsequent messages as streams (continuous data flow). So, an inventive arrangement can be realized either using messages (for example only, the MMS messages may be used), or streams for transmitting the data of the show to the receiving terminal, or a combination of streams and messages. The invention makes it also possible to form a sophisticated reeling of a show. One (or some) stream or message (it may be the basic stream) contains material displayed when reeling the show. The actual show comprises material from several streams or messages, but when reeling the whole material is not displayed but only the material for the reeling. Furthermore, a zooming function is possible. A part of an original show is desired to display again in a zoomed way. The subsequent streams or messages contain more material for the zooming. So all kinds of improvements for a show may be identified in separate requests. The improvements may be encoded only when the request has been received, so this procedure allows more alternatives for the user. The user is more motivated to wait for the desired specific improvement than a normal basic material.

The invention offers a choice for the used of a receiving terminal to select the quality level of the show in question. The waiting time before the show starts to display is also significantly shorter than in the present solutions. The transmission network for the streams or messages according to the invention can be any suitable telecommunication network, but in particular, it is useful when the transmission path goes via a mobile network. It is evident that the invention is not restricted to the examples mentioned in this text, but the invention can be utilized in other solutions as well, in the scope of the inventive idea.

## Claims

1. A method for playing in a receiving terminal a multimedia presentation that is received via a transmission network,
**characterized by** the steps of:
receiving a basic multimedia presentation at a bit rate allowing playing almost in real-time but with low quality ,
storing data of the basic multimedia presentation,
sending a request for the multimedia presentation with better quality
receiving an extra transmission comprising additions to the basic multimedia presentation,
combining the additions with the basic multimedia presentation t o form a cumulative multimedia presentation, wherein playing the cumulative multimedia presentation yields better quality.

2. The method as in claim 1, wherein several requests are sent and in response to each request an extra transmission with additions is received for combining with the current cumulative multimedia presentation.

3. The method as in claim 1, **characterized in that** the request includes the number of the extra transmissions and upon receipt of all the extra transmissions the cumulative multimedia presentation is played.

4. The method as in claim 1, **characterized in that** the additions comprise of differences between the basic multimedia presentation that is encoded with a low quality and the same multimedia presentation encoded with higher quality.

5. The method as in claim 2, **characterized in that** the additions in each extra transmission comprise of differences between the qual i-ties of the current extra transmission and the previous extra transmission.

6. The method as in claim 1 or 2, **characterized in that** the basic multimedia presentation comprises a limited number of frames and each extra transmission comprise of additional frames.

7. The method as in claim 1 or 2, **characterized in that** the basic multimedia presentation comprises a limited number of pixels per frame and each extra transmission comprise of additional pixels per frame.

8. The method as in claim 1 or 2, **characterized in that** the basic multimedia presentation comprises a limited amount of color information per frame and each extra transmission comprise of additional color information per frame.

9. The method as in claim 1 or 2, **characterized in that** each extra transmission comprises of additional data of different material types.

10. A method for providing a receiving terminal with a multimedia presentation, wherein the presentation is transmitted via a transmission network in response to a request from the receiving terminal,
**characterized by** the steps of:
transmitting, in response to the first request, a basic multimedia presentation with such a quality that allows playing almost in real-time,
receiving at least one further request,
transmitting, in response to each further request, an extra transmission including additions to previous transmission.

11. The method as in claim 10, **characterized in that** the further request includes the number of the extra transmissions and upon receipt of all the extra transmissions are transmitted on by one.

12. The method as in claim 10, **characterized in that** the additions comprise of differences between the basic multimedia presentation that is encoded with a low quality and the same multimedia presentation encoded with higher quality.

13. The method as in claim 10, **characterized in that** the additions in each extra transmission comprise of differences between the qualities of the current extra transmission and the previous extra transmission.

14. The method as in claim 10, **characterized in that** the basic multimedia presentation comprises a limited number of frames and each extra transmission comprise of additional frames.

15. The method as in claim 10, **characterized in that** the basic multimedia presentation comprises a limited number of pixels per frame and each extra transmission comprise of additional pixels per frame.

16. The method as in claim 10, **characterized in that** the basic multimedia presentation comprises a limited amount of color information per frame and each extra transmission comprise of additional color information per frame.

17. The method as in claim 10, **characterized in that** each extra transmission comprises of additional data of different material types.

18. A terminal for playing a multimedia presentation received via a transmission network, **characterized by**:
a storing means for storing a basic multimedia presentation,
means for forming a request for an extra transmission comprising additions to the basic multimedia presentation,
an adding means for making a cumulative stream by combining the additions with the basic multimedia presentation and
a displaying means for displaying the cumulative stream.

19. A terminal as in claim 18, **characterized in that** the means for forming a request are adapted to form several consecutive requests relating to the same multimedia presentation.

20. The terminal as in claim 18, **characterized in that** the means for forming a request are adapted to form a single request including the number of the extra transmissions

21. The terminal as in claim 18, **characterized in that** the additions decoded from an extra transmission comprise of compression differences between current extra transmission and the previous extra transmission.

22. The terminal as in claim 18, **characterized in that** the additions decoded from an extra transmission comprise additional frames.

23. The terminal as in claim 18, **characterized in that** the additions decoded from an extra transmission comprise of additional pixels for the frames.

24. The terminal as in claim 18, **characterized in that** the additions decoded from an extra transmission comprise additional color information for frames.
